# EUROPEAN PATENT APPLICATION

(11) **EP 1 914 480 A1**
(43) Date of publication of application: **23.04.2008**
(21) Application number: 06781645.4
(22) Date of filing: 26.07.2006
(51) Int. Cl.: F24C 15/02, F16J 15/10

(54) **HEATING COOKER**

(30) Priority: 03.08.2005 JP 2005225102
(71) Applicant: Sharp Kabushiki Kaisha, Osaka-shi, Osaka 545-8522 (JP)
(72) Inventor: YAMAGUCHI, Kiyoshi, Yamatokooriyama-shi, Nara-ken (JP); NISHIJIMA, Masahiro, Nara-ken (JP); KITAYAMA, Hiroki, Minamikawachi-gun, Osaka-fu (JP)
(74) Representative: Brown, Kenneth Richard
(86) International application number: PCT/JP2006/314733
(87) International publication number: WO 2007/015397

(57) **Abstract**

The heating cooker is provided with a main body casing, a door connected to the front panel of the main body casing via a hinge so as to open and close and an annular packing seal 40 which is located between the door and the front panel and has a roughly identical cross section shape. The hinge side of the annular packing seal 40 provided at the door (including a door frame 41 and a door cover 42) is positioned closer to the front surface side by a dimension L than the side opposite to the hinge.

## Description

### TECHNICAL FIELD

The present invention relates to a heating cooker.

### BACKGROUND ART

Conventionally, there has been a heating cooker which has a main body casing and a door pivotably mounted to the main body casing and in which an annular packing seal for sealing between the main body casing and the door is attached to the rear surface side of the door (refer to, for example, JP 2000-46192 A).

In the above heating cooker, the packing seal comes in contact with a front panel of the main body casing from the hinge side of the packing seal when the door is being closed, and a load due to the elastic deformation of the packing seal is applied first to the hinge side of the door in comparison with the side of the packing seal opposite to the hinge. Accordingly, there is a problem that the load due to the elastic deformation of the packing seal on the door becomes nonuniform in a state in which the door is closed, and a gap, which is located between the front panel of the main body casing and the door, becomes wider on the side opposite to the hinge, resulting in an uniform gap between the front panel of the main body casing and the door and causing an unstable sealing state. Therefore, it is concerned that the door freely opens when the internal pressure of the cooker rises, and it is necessary to securely lock the closed door by means of a mechanism such as a latch lock.

It is an object of the present invention to provide a heating cooker capable of keeping a reliable sealing state by uniforming a gap between the front panel of the main body casing and the door in a state in which the door is closed without employing a mechanism such as a latch lock for locking the closed door.

### DISCLOSURE OF THE INVENTION

In order to achieve the above object, there is provided a heating cooker comprising:
a main body casing having a front panel;
a door connected to one side of the front panel of the main body casing via a hinge so as to open and close; and
an annular packing seal provided at the door or the front panel so as to be located between the door and the front panel, wherein
a portion on the hinge side of the annular packing seal is positioned closer to a front surface side than a portion opposite to the hinge side of the annular packing seal when the annular packing seal is provided at the door, or
the portion on the hinge side of the annular packing seal is positioned closer to a back surface side than the portion opposite to the hinge side of the annular packing seal when the annular packing seal is provided at the front panel.

According to the above construction, by providing the annular packing seal at the door and positioning the portion on the hinge side of the annular packing seal closer to the front surface side than the portion opposite to the hinge side of the annular packing seal, even if the hinge side of the annular packing seal first comes closer to the front panel of the main body casing when the door is being closed, the whole annular packing seal concurrently comes in contact with the front panel of the main body casing immediately before the door is closed, and the whole annular packing seal is elastically deformed roughly similarly in the state in which the door is closed. Otherwise, by providing the annular packing seal at the front panel of the main body casing and positioning the portion on the hinge side of the annular packing seal closer to the back surface side than the portion opposite to the hinge side of the annular packing seal, even if the hinge side of the annular packing seal first comes closer to the front panel of the main body casing when the door is being closed, the whole annular packing seal concurrently comes in contact with the front panel of the main body casing immediately before the door is closed, and the whole annular packing seal is elastically deformed roughly similarly in the state in which the door is closed. With this arrangement, a load due to the elastic deformation of the packing seal is uniformly applied to the whole door. Therefore, the gap between the front panel of the main body casing and the door is uniformed in the state in which the door is closed without employing a mechanism such as a latch lock for locking the closed door, and a reliable sealing state can be maintained.

In one embodiment of the invention, the annular packing seal has a roughly identical cross section shape.

In one embodiment of the invention, when the door is closed, a squeeze dimension of the portion on the hinge side of the annular packing seal is smaller than a squeeze dimension of the portion opposite to the hinge side of the annular packing seal.

According to the above embodiment, although the hinge side of the annular packing seal first comes closer to the front panel of the main body casing when the door is being closed, by making the squeeze dimension due to the contact of the portion on the hinge side of the annular packing seal provided at the door (or the front panel) smaller than the squeeze dimension of the portion opposite to the hinge side, the whole annular packing seal concurrently comes in contact with the front panel of the main body casing immediately before the door is closed, and the whole annular packing seal is elastically deformed roughly similarly in the state in which the door is closed. With this arrangement, the load due to the elastic deformation of the packing seal is uniformly applied to the whole door.

As is apparent from the above, according to the heating cooker of the present invention, the gap between the front panel of the main body casing and the door is uniformed in the state in which the door is closed without employing a mechanism such as a latch lock for locking the closed door, and a reliable sealing state can be maintained.

### BRIEF DESCRIPTION OF THE DRAWINGS

Fig. 1 is a perspective view showing an external appearance of a heating cooker of one embodiment of the present invention;
Fig. 2 is a perspective view showing an external appearance in a state in which the door of the heating cooker is opened;
Figs. 3A, 3B and 3C are a front view, a plan view and a side view of the essential part including the door of the heating cooker;
Fig. 4 is a side view showing a state on the way of opening or closing the door of the heating cooker;
Fig. 5 is a sectional view of the essential part of the door viewed from the line IV-IV of Fig. 4; and
Fig. 6 is a sectional view of the essential part of another door viewed from the line IV-IV of Fig. 4.

### DETAILED DESCRIPTION OF THE INVENTION

An embodiment of the heating cooker of the present invention will now be described with reference to the accompanying drawings.

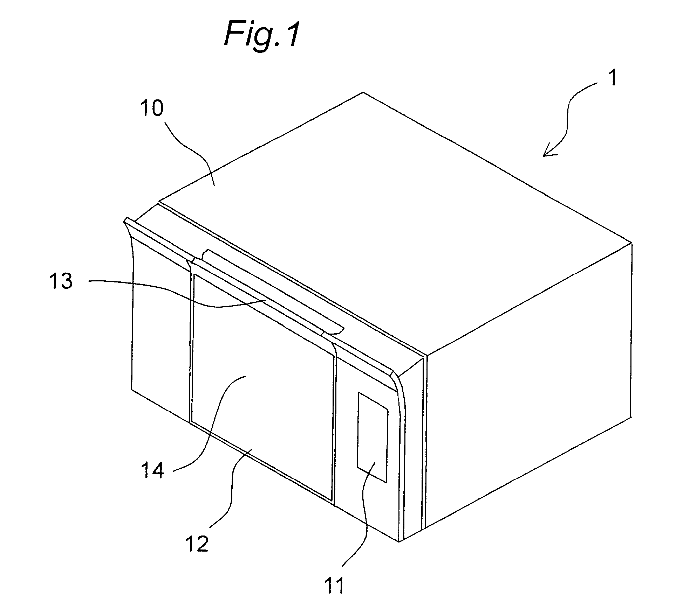

Fig. 1 is a perspective view showing an external appearance of a heating cooker 1 of one embodiment of the present invention, in which a door 12 is connected to the front of a rectangular parallelepiped main body casing 10 so as to pivot roughly around its lower end side. The door 12 is provided with an operation panel 11 on the right-hand side, a handle 13 at the upper portion, and a window 14 made of a heat-resistant glass at the central portion.

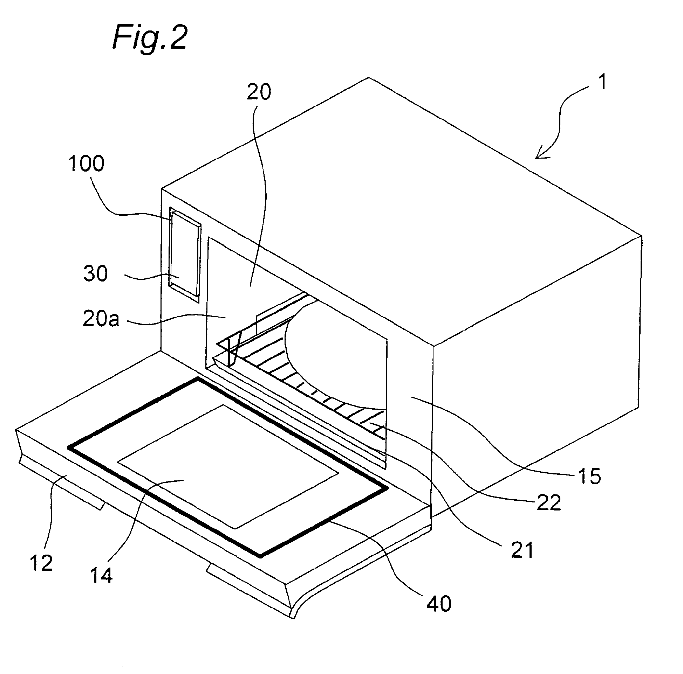

Fig. 2 is a perspective view showing an external appearance of the heating cooker 1 in a state in which the door 12 is opened, where a rectangular parallelepiped heating chamber 20 is provided in the main body casing 10. The heating chamber 20 has an opening 20a on the front side facing the door 12, and a side face, a bottom face and a top face of the heating chamber 20 are each formed of a stainless steel plate. Moreover, a side of the door 12 facing the heating chamber 20 is formed of a stainless steel plate. An annular packing seal 40 is attached to the rear surface side of the door 12 so as to enclose the outer periphery of the window 14 to provide a seal between the main body casing 10 and the door 12 when the door 12 is closed. By arranging a heat insulator (not shown) in the surroundings of the heating chamber 20 and inside the door 12, heat insulation between the inside and the outside of the heating chamber 20 is achieved.

Moreover, a tray 21 made of stainless steel is placed on the bottom surface of the heating chamber 20, and a rack 22 made of stainless steel wires for carring a cooking object is put on the tray 21. It is noted that in the opened state the upper surface of the door 12 is roughly horizontal, and the cooking object can be temporarily placed on the door 12 when taken out.

Further, the main body casing 10 is provided with a water tank accommodating portion 100 for accommodating a water tank 30 at the left side of the heating chamber 20. The water tank 30 is inserted into the water tank accommodating portion 100 from the front side toward the back side.

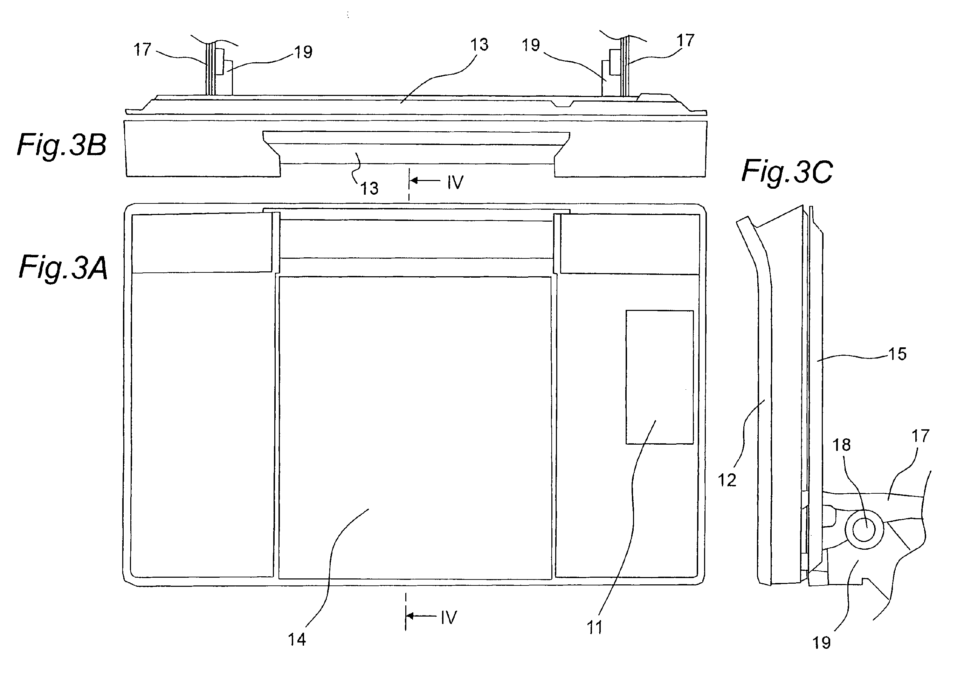

Fig. 3A, Fig. 3B and Fig. 3C show a front view, a plan view and a side view of the essential part including the door 12 of the heating cooker 1, respectively. In Figs. 3A through 3C, 15, 17, 18 and 19 denote a front panel, an arm, a guide roller and a guide arm, respectively.

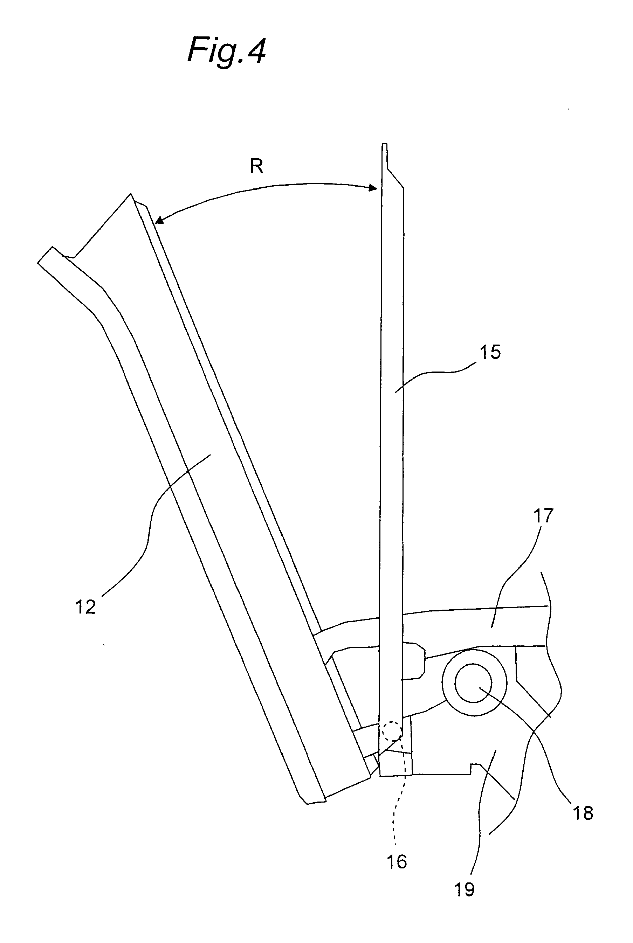

Fig. 4 shows a side view showing a state on the way of opening or closing the door 12 of the heating cooker 1. As shown in Fig. 4, the front panel 15 of the main body casing 10 (shown in Figs. 1 and 2) has a roughly square frame-like shape having the opening 20a of the heating chamber 20. The front end of the guide arm 19 is fixed to the lower side on both sides of the front panel 15 at a prescribed interval. The guide roller 18 is pivotably connected to the guide arm 19. Moreover, the door 12 is supported swingably to the front panel 15 via the hinge 16. When the door 12 is opened or closed in the direction of the arrow R, the arm 17 protrudes or retreats being guided by the guide roller 18 in accordance with the opening or closing of the door 12. When the door 12 is opened to become roughly horizontal, the door 12 is stopped and maintained in a roughly horizontal state by a stopper mechanism (not shown) constituted of the arm 17 and the guide arm 19.

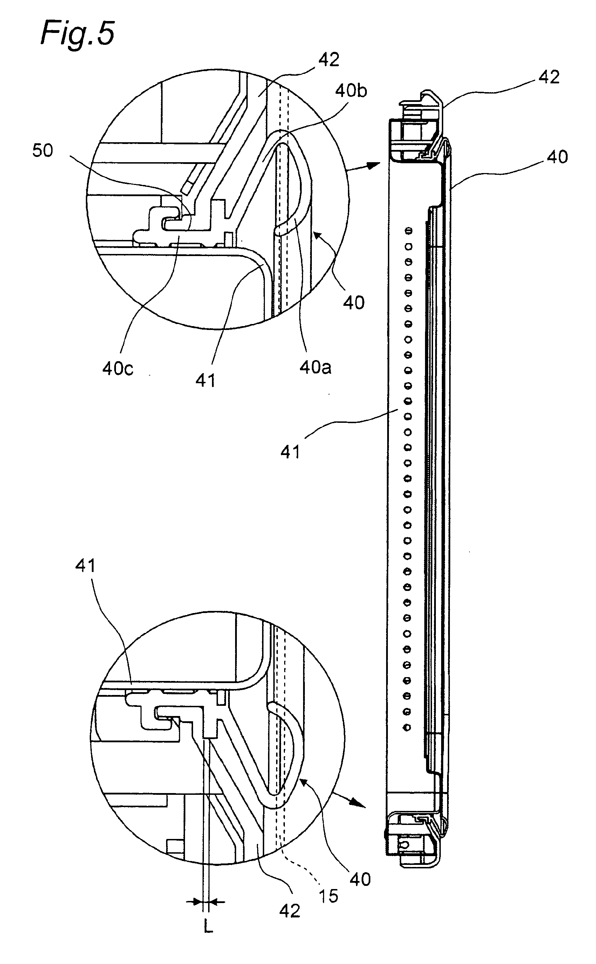

Next, Fig. 5 shows a sectional view of the essential part of the door 12 viewed from the line IV-IV of Fig. 4. It is noted that Fig. 5 shows only a door frame 41, a door cover 42 and the annular packing seal 40 of the door 12. It is noted that the reference numeral 15 indicated by the dashed lines denotes the front panel.

As shown in Fig. 5, the door cover 42 is fit on the outer peripheral of the door frame 41 on the main body casing side (right-hand side of Fig. 5). Moreover, the packing seal 40 is attached so as to be partially held between the door frame 41 and the door cover 42.

The annular packing seal 40 has a roughly identical cross section shape throughout the entire periphery. The annular packing seal 40 has a cross section shape having a curved portion 40a curved in a circular arc shape, a bent portion 40b that extends bending from the outer peripheral side of the curved portion 40a, a base portion 40c that extends from the inner peripheral side of the bent portion 40b frontward (left-hand side in Fig. 5) and a groove portion 50 provided on the outer peripheral side of the base portion 40c. By fitting the base portion 40c of the annular packing seal 40 on the door frame 41 and inserting the door cover 42 into the groove portion 50, the base portion 40c of the packing seal 40 is fixed held between the door frame 41 and the door cover 42.

Then, as shown in the two enlarged views (views enclosed by the circles) of Fig. 5, a hinge 16 side (lower side in Fig. 5) of the annular packing seal 40 is positioned closer to the front surface side (left-hand side in Fig. 5) by a dimension L (e.g., 0.5 mm) than the side (upper side in Fig. 5) opposite to the hinge 16. In this case, the left-hand side and the right-hand side of the annular packing seal 40 are inclined to the front surface side from the upper side to the lower side.

According to the heating cooker of the above construction, the annular packing seal 40 of the roughly identically cross section shape is provided at the door 12, and the hinge 16 side of the annular packing seal 40 is positioned closer to the front surface side than the side opposite to the hinge 16. Therefore, even if the hinge 16 side of the annular packing seal 40 first comes closer to the front panel 15 of the main body casing 10 when the door 12 is being closed, the whole annular packing seal 40 roughly concurrently comes in contact with the front panel 15 of the main body casing 10 immediately before the door 12 is closed, and the whole annular packing seal 40 is elastically deformed roughly uniformly in the state in which the door 12 is closed. With this arrangement, a load due to the elastic deformation of the packing seal 40 is uniformly applied to the whole door.

Therefore, the gap between the front panel 15 of the main body casing 10 and the door 12 is uniformed in the state in which the door 12 is closed without employing a mechanism such as a latch lock for locking the closed door 12, and a reliable sealing state can be maintained.

Although the heating cooker, in which the annular packing seal 40 is made to have the roughly identical cross section shape and the hinge 16 side of the annular packing seal 40 provided at the door 12 is positioned closer to the front surface side than the side opposite to the hinge 16, has been described in the above embodiment, it is acceptable to provide an annular packing seal having a roughly identical cross section shape at the front panel and to position the hinge side of the packing seal closer to the back surface side than the side opposite to the hinge.

Moreover, it is acceptable to provide an annular packing seal that does not have a roughly identical cross section shape at the door (or the front panel of the main body casing) and to make a squeeze dimension due to the contact of the annular packing seal on the hinge side smaller than a squeeze dimension due to the contact on the side opposite to the hinge.

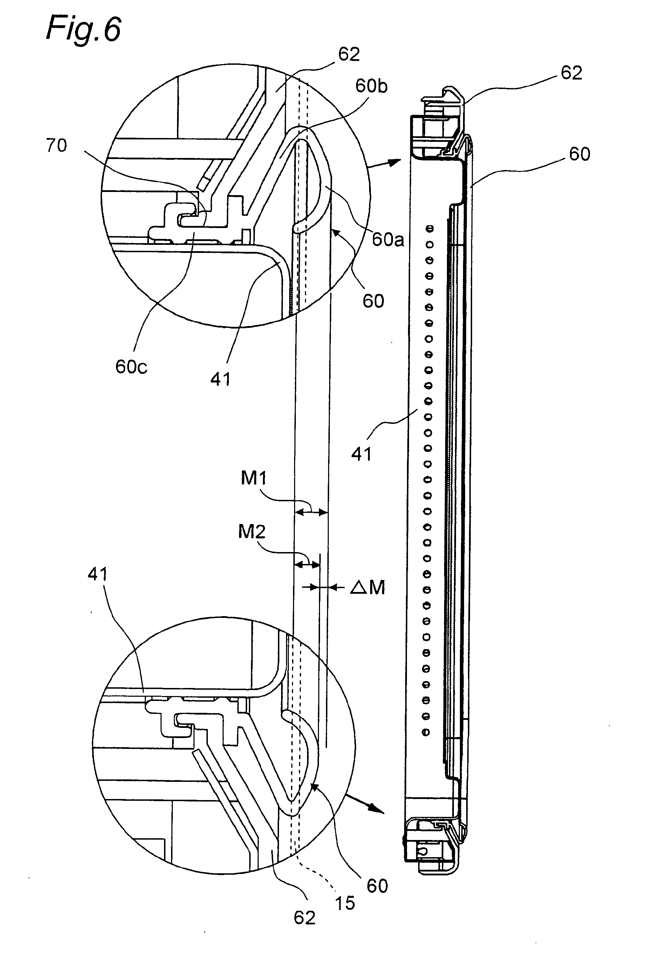

For example, Fig. 6 shows a sectional view of the essential part of another door viewed from the line IV-IV of Fig. 4, where the door frame 41 has the same construction as that of the essential part of the door shown in Fig. 5 except for an annular packing seal 60 and a door cover 62.

The annular packing seal 60 has a cross section shape that is not roughly identical throughout the entire circumference. The annular packing seal 60 has a cross section shape having a curved portion 60a curved in a circular arc shape, a bent portion 60b that extends bending from the outer peripheral side of the curved portion 60a, a base portion 60c that extends from the inner peripheral side of the bent portion 60b frontward (left-hand side in Fig. 6) and a groove portion 70 provided on the outer peripheral side of the base portion 60c. By fitting the base portion 60c of the annular packing seal 60 on the door frame 41 and inserting the door cover 62 into the groove portion 70, the base portion 60c of the packing seal 60 is fixed held between the door frame 41 and the door cover 62. Then, a squeeze dimension M2 due to the contact of the hinge side (lower side in Fig. 6) of the annular packing seal 62 with the front panel 15 is made smaller by ΔM than a squeeze dimension M1 due to the contact of the side (upper side in Fig. 6) opposite to the hinge with the front panel 15. With this arrangement, an effect similar to that of Fig. 6 is performed.

Furthermore, although the heating cooker, in which the door 12 is opened and closed via the hinge 16 on the lower side of the front panel 15 of the main body casing 10, has been described in the above embodiment, the present invention may also be applied to a heating cooker or the like in which a door is opened and closed via a hinge on the right-hand or left-hand side of the front panel of the main body casing.

## Claims

1. A heating cooker comprising:
a main body casing having a front panel;
a door connected to one side of the front panel of the main body casing via a hinge so as to open and close; and
an annular packing seal provided at the door or the front panel so as to be located between the door and the front panel, wherein
a portion on the hinge side of the annular packing seal is positioned closer to a front surface side than a portion opposite to the hinge side of the annular packing seal when the annular packing seal is provided at the door, or
the portion on the hinge side of the annular packing seal is positioned closer to a back surface side than the portion opposite to the hinge side of the annular packing seal when the annular packing seal is provided at the front panel.

2. The heating cooker as claimed in Claim 1, wherein
the annular packing seal has a roughly identical cross section shape.

3. The heating cooker as claimed in Claim 1, wherein,
when the door is closed, a squeeze dimension of the portion on the hinge side of the annular packing seal is smaller than a squeeze dimension of the portion opposite to the hinge side of the annular packing seal.
